# EUROPEAN PATENT APPLICATION

(11) **EP 2 373 032 A1**
(43) Date of publication of application: **05.10.2011**
(21) Application number: 11156654.3
(22) Date of filing: 02.03.2011
(51) Int. Cl.: H04N 7/26, H04N 7/50

(54) **Block motion searching device and method**

(30) Priority: 19.03.2010 TR 201002110
(71) Applicant: Vestel Elektronik Sanayi ve Ticaret A.S., 45030 Manisa (TR)
(72) Inventor: Sahin, Ahmet, 45030 Manisa (TR); Tetik, Yusuf Engin, 45030 Manisa (TR)
(74) Representative: Cayli, Hülya

(57) **Abstract**

Present invention describes a block motion searching device and method for motion compensated encoding calculating motion vectors by block-matching, comprising an inter-frame, a first block "X" positioned within said inter-frame, a reference frame to search said block "X" defining a search area, at least one second block "Y(j)" within said search area, wherein based on said first block "X" and said at least second block "Y(j)" a matrix of coefficients "Z" is defined following the formula Z = DCT2(X-Y[j])/Q comprising a Motion Search Using Non-zero DCT Coefficient Count for said digital video encoding in order to achieve a least number of DCT coefficients or a least number of bits.

## Description

### Technical Field

The invention relates to a block motion searching method and an electronic device capable of operating said block motion searching method.

### Prior Art

Regarding block motion searching device, an improved search of motions is requested by the market. Particularly devices displaying motion pictures will benefit from an improved block motion searching device.

The prior art concepts provide solutions in which both the SAD and SSE metrics are simple on the one hand because of low complexity metrics for block matching. On the other hand, both may not assure the final goal of least number of DCT coefficients or least number of bits. This however is inefficient particularly in the sense, that SAD or SSD criteria do not necessarily produce the best match in terms of non-zero coefficient count and bit-rate.

With this background the problem to be solved is, that the least number of DCT coefficients or the least number of bits can be reached for sure.

A particular solution is provided by a block motion searching device for motion compensated encoding by calculating motion vectors by block-matching, comprising an inter-frame, a first block "X" positioned within said inter-frame, a reference frame to search said block "X" defining a search area, at least one second block "Y(j)" within said search area, wherein based on said first block "X" and said at least second block "Y(j)" a matrix of coefficients "Z" is defined following the formula Z = DCT2(X-Y[j])/Q comprising a Motion Search Using Nonzero DCT Coefficient Count for said digital video encoding.

Video, in general, consists of frames each representing an image sampled at a time instant. In general, said frames are separated by a constant time interval, wherein commonly used frame frequencies are 24, 25 and 30 frames per second.

However, there is a small time interval between two consecutive frames which means that therefore usually there also is a small difference between them resulting from motion.

Most video compression schemes make use of the similarity between the frames in order to reduce the size of the encoded stream output by using dependent "inter-frames".

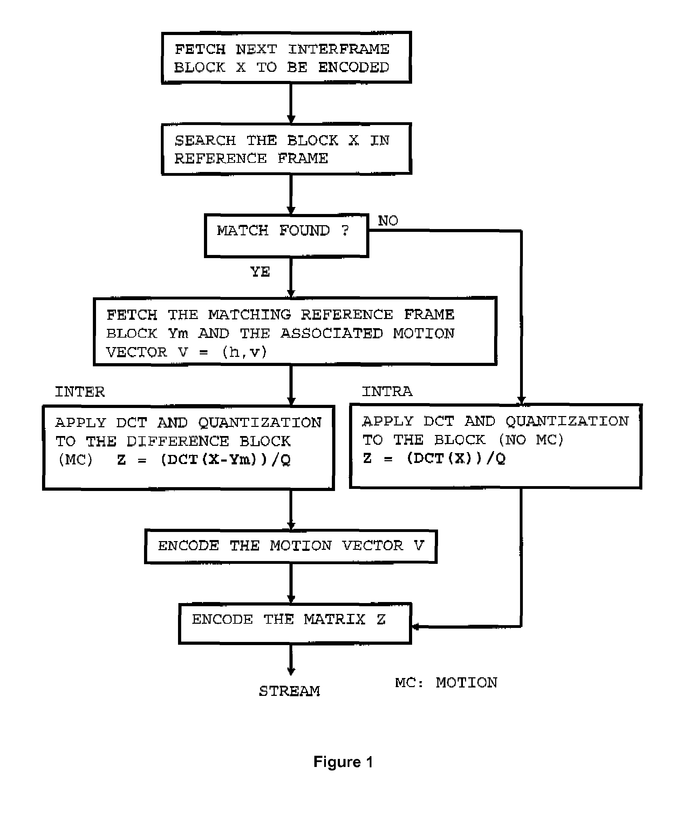

According to Fig. 1, showing a prior art block diagram, video compressors have a motion estimation unit that calculates the motion between the inter-frame and the reference frames. Motion estimation unit then divides the inter-frame into non-overlapping blocks and searches each block within a search range in the reference frames.

In case that a match is found, then motion estimation unit registers the motion vector and the matching block for further processing as shown in Fig 1. If no match is found, the block has to be encoded as an intra block in an inter-frame.

It is to be noted that inter-frames may contain intra blocks and reference frames themselves can also be inter-frames. It is to be noted also, that there are intra frames and intra blocks. Intra blocks may also appear in an inter-frame and they are coded in the same way that the blocks of an intra frame are coded with no motion vectors. This is the usual prior art concept.

Since there is a small difference between two consecutive frames it is advantageous to encode only said difference instead of the whole frame after compensating for the motion within the frame.

This means that it is not efficient to encode the direct difference between two frames without compensating for motion as defined under MPEG1, 2 and 4 (refer to ISO13818-2), since the position of moving objects in both frames will not match anyhow and therefore commonly causes severe errors although said objects in both frames are the same and both frames belong to the same scene.

For that reason, video compressors have a motion estimation unit that calculates the motion between the inter-frame and reference frames. Motion estimation unit then divides the inter-frame into non-overlapping blocks and searches each block within a search range in the reference frames. Motion estimation and compensation are done under MPEG.

### Object of the Invention

The object of the present invention is to perform block motion search operation by using inter-frame concept.

Another object of the present invention is to define a search area which comprises a search block and a reference block.

Another object of the present invention is to define a reference frame which is used to search said block.

### Brief Description of the Invention

The approach according to present invention in contrast to the prior art providing for estimating and compensating motion as defined under MPEG is "how and under which criteria the motion estimation is done". The prior art makes motion estimation in order to find the block giving least sum of absolute or square difference. The invention provides for motion estimation in order to find the least number of DCT coefficients or least number of bits.

### Brief Description of the Drawings

Figure 1 illustrates the a state of art block diagram;
Figure 2 illustrates a further state of art block diagram;
Figure 3 illustrates a search of block positioned in "X" by search range around the position of "X";

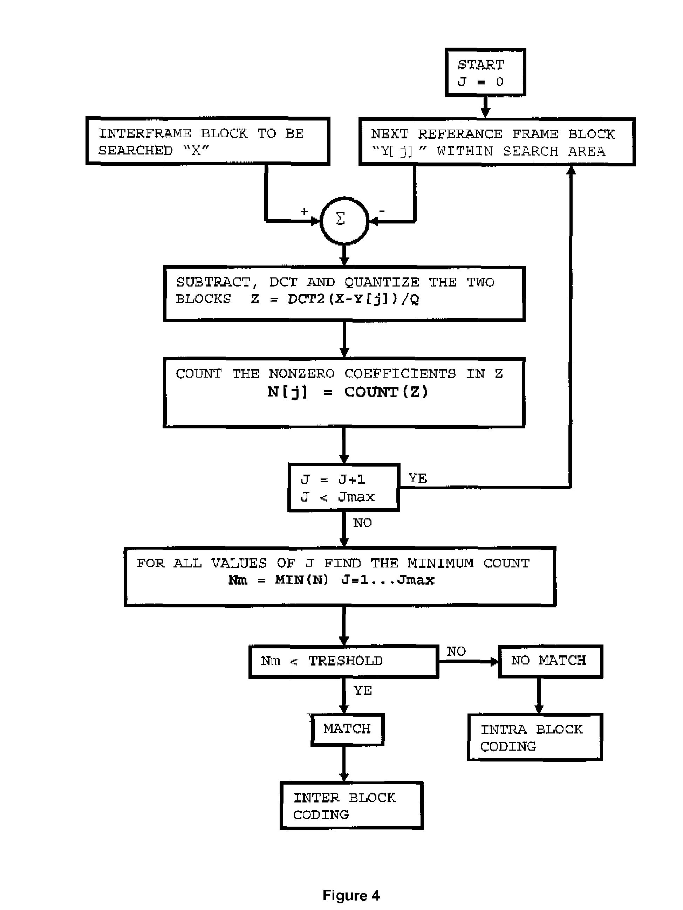

Figure 4 illustrates the principle of the invention by a block diagram.

### Detailed Description of the Invention

Accordingly a key issue to solve the underlying problem is using minimum Sum of Absolute Differences (SAD) or Sum of Square Differences (SSD) criteria for block matching in motion estimation. So the goal of a minimum number of coefficients into its block matching and motion estimation scheme is achieved already at the motion estimation stage.

Calculating motion vectors by block-matching commonly is performed by minimizing the sum of absolute differences or sum of square differences between the block in the current frame and the block in the reference frame.

In the inventive concept a so called "inter-frame" is used. However, the types of frame encoding in video compression can be divided into two concepts:
There are intra-frames and inter-frames. Intra frames are self-contained and encoded in such a way that they do not need other frames in order to be able to be decoded. Inter-frames, for bit-rate reduction, are encoded with reference to reference frames and in order to be decoded they require the prior decoding of other frames.

Inter-frames depend on other frames through motion vectors. Intra frame and block encoding is beyond the scope of the current document which focuses only on the inter frame encoding.

Such inter-frames are known for example from MPEG2 ISO 13818-2.

Commonly such inter-frames comprise variable pixel sizes. Under MPEG2 ISO 13818-2 standard, there are 3 types of frames I, P and B frames. I stands for intra frames, P and B frames are inter-frames. P frames depend only on the previous frames, B (Bi-directional) frames depend both on the previous and future frames. Typical frame sequence is I,B,B,P,B,B,P,B,B,I... .

A first block "X" is defined as the block to be searched. Usually such a block in accordance with MPEG has a size 16 by 16 pixels.

Furthermore, also a so called "reference-frame" is used. Such reference-frames are defined under for example from MPEG2, MPEG1, and MPEG4.

According to present invention said reference-frame is used to search said block "X". This can be achieved by defining a search area. Said search area comprises at least one second block "Y(j)" within said search area. Said "second block "Y(j)"" is the block to be searched. Said first block and said at least second block are defined under ISO 13818-2.

According to present invention, a matrix of coefficients "Z" is defined following the formula Z = DCT2(X-Y[j])/Q. Usually said formula is used and the number of non-zero coefficients in Z is minimized for best match in contrast to the prior art which uses Z = SUM(abs(X-Y[j])) and minimizes Z for best match.

According to present invention, a Motion Search Using Nonzero DCT Coefficient Count is used. Using such a Motion Search Using Nonzero DCT Coefficient Count provides for the additional effect, a minimum number of non-zero DCT coefficients in Z to be coded is guaranteed and as such more compression is provided, whereas the prior art does not provide for such guarantee, it just looks for a similar looking block.

The underlying problem can also be solved by a video encoder providing such a block motion searching device.

An embodiment of said video encoder comprises at least one of said digital video encoders and/or at least one block motion searching device previously described.

Herewith the additional effect of faster parallel motion estimation is provided.

The problem can also be solved by at least one digital video encoder and/or at least one decoding application previously described.

The underlying problem can also be solved by a method operated by said block motion searching device, providing a reduction of the numbers of the coefficients "Z" wherein the difference of two blocks is discrete cosine transformed (DCT) and quantized by the formula Z = DCT2(X-Y[j])/Q in a first step and the non-zero coefficients in Z are counted and recorded in vector N such that N[j] = COUNT(Z) in a second step.

Herewith the effect is provided to determine the minimum count in all search regions by buffering the counts in vector N.

Providing two method steps, a first method step quantizing difference of two blocks by the formula Z = DCT2(X-Y[j])/Q and a second method step, operated thereafter. Said first step is counting and recording the non-zero coefficients in Z in vector N such that N[j] = COUNT(Z). The prior art in contrast thereto does not target minimum number of DCT coefficients.

An embodiment of said method operated by said block motion searching device comprises the additional feature that "j" is incremented in a third step and the operation is repeated until all Y[j] blocks are tried.

Herewith the additional effect is provided to buffer all coefficient count for all j's.

An alternative for said embodiment of said method operated by said block motion searching device comprises the additional method step that the minimum value Nₘ in vector N is identified and compared with a threshold previously defined.

Herewith the additional effect is provided to find the position j for which the count is minimum.

A still further alternative for said embodiment of said method operated by said block motion searching device comprises the additional method step that wherein if said minimum value is below said threshold, a match occurs and said block "X" is inter-coded with motion vectors, if it is not, said block "X" is intra-coded.

Herewith the additional effect is provided to comply with the standards. If there should be no match block must be intra-coded even it is in an inter-frame.

The invention can be used for all types of devices, using a block motion searching device, like TFT LCD TV sets for instance.

In the following, a preferred embodiment of the invention is described with reference to the drawings

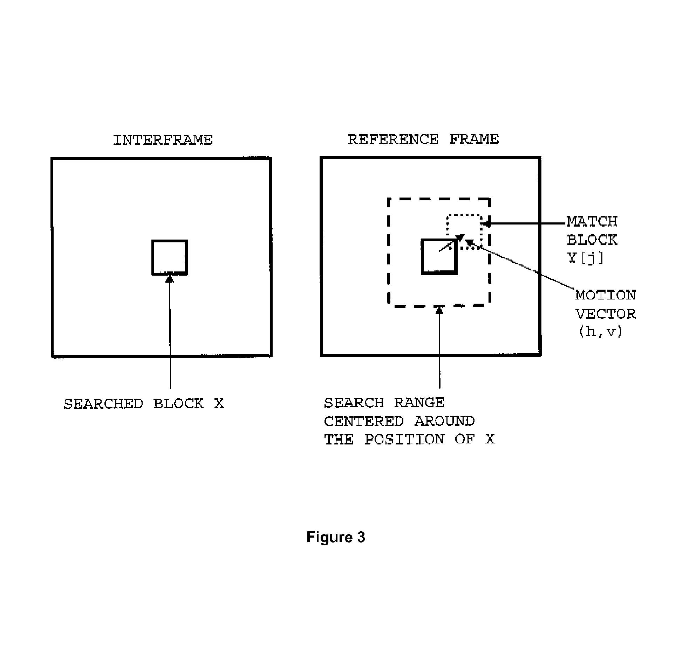

Most digital video encoders calculate motion vectors by using block-matching as shown in Fig 3.

Hereby each not overlapping block in an inter frame is searched in the reference frame and if a match is found their relative horizontal and vertical positions are registered as a motion vector V = (h,v).

If no match is found within the search range, that block has to be coded as an intra block in the reference frame.

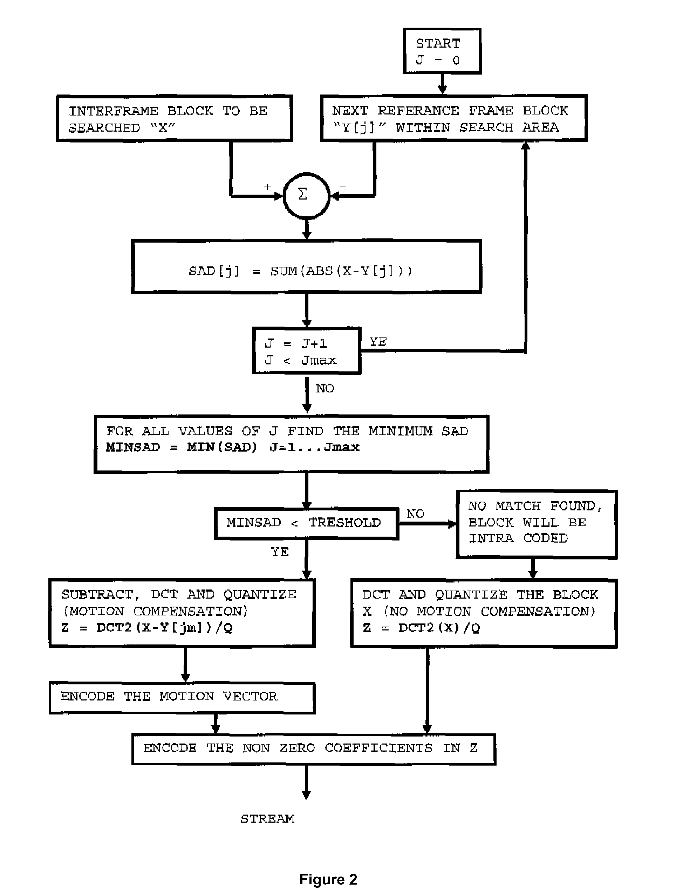

In conventional block-matching, with reference to Fig. 2 and to Fig. 3, the frame to be encoded as inter-frame is divided into the non-overlapping blocks Xs.

Then each inter-frame block X is compared to all possible blocks Y(j) within a search range in reference frames.

Comparison is made by subtracting the two blocks and taking the square or the absolute value of the difference block and then summing the elements.

A SAD vector is constructed such that SAD[j] = SUM (ABS(X-Y[j])). The dimension of the SAD vector is Jmax which is the maximum number of blocks within the search range. There is no limit for Jmax, but best match is expected for small j's.

It is to be noted, that said vectors do not have to be non-overlapping and might even be subpixel shifted.

Using the SAD vector minimum SAD value MINSAD is found. MINSAD is ≥ zero above, with zero being the best match.

If MINSAD is below a given threshold the index jₘ giving that MINSAD is registered and the motion vector is calculated. Using Sum of Square Errors, SSE, instead of SAD does not make a considerable difference in the results.

The SAD metric in the flow chart can be replaced by SSE metric.

After the matching block is found, two dimensional DCT and quantization is applied to the difference block as shown by the formula Z = DCT2(X-Y [jₘ])/Q where jₘ is the index of the matching block indicated in Fig. 2. Here for instance one dimensional indexing is used. Non-zero coefficients of the matrix Z are coded into the bit stream. In case that due to no-match condition, the block X was to be intra coded such that Z = DCT2(X)/Q there would be more non-zero coefficients in Z and more bits would have to be spent for coding X. Therefore, block matching plays a key role in video compression.

Discrete Cosine Transform (DCT) is a time to frequency domain transformation widely used in signal and image processing including digital video encoding, wherein DCT can be one or can be two dimensional.

Two dimensional DCT is generally used in image and video compression. DCT then acts as a spectrum analyzer and extracts the frequency information from a time or space domain signal.

Since human vision is more sensitive to lower frequencies, higher frequencies can be eliminated in favour of bit rate reduction. 2-D DCT is applied to 8x8 non-overlapping blocks in MPEG2 before quantization.

Quantization in digital video encoding refers to the element-wise dividing of discrete cosine transform output matrix by a constant or variable quantization matrix.

Quantization aims to reduce the number of non-zero dot coefficients depending on rate-distortion requirements.

As described above, the present invention incorporates the final goal of minimum number of coefficients into its block matching and motion estimation scheme, achieving that goal at the motion estimation stage.

For the following explanation it is referred to ISO 13818-2. The purpose of "block matching and motion estimation" in video encoding is to take advantage of temporal redundancy between frames in order to use fewer bits in the coded stream. In fact all video encoding formats are video compression techniques aiming at reducing bit-rate for transmission and storage. There are two main points to achieve compression in video encoders. One is spatial and the other is temporal redundancy. The present invention is on block matching and motion estimation and hence on temporal redundancy usage. This proposal offers a new method for block matching which is already used in the prior art. The prior art provides for this purpose by subtracting two blocks and summing the absolute values or square of the differences as a measure of similarity and finding the block which minimizes this sum below a threshold. The present invention provides for this purpose by subtracting the two blocks taking its DCT transform, quantizing and finding the block which gives the least number of non-zero DCT coefficients(here the direct target is not best similarity but least coefficient and hence bit count). The prior art applies DCT to the difference after finding the best match block and subtracting it from the current block. After that the prior art quantizes the DCT coefficients and encodes the non-zero ones. The present invention applies DCT to the difference block while searching best match and as a result finds directly the least count of non-zero quantized DCT coefficients. The block matching in the prior art does not involve DCT and hence cannot guarantee for a least count of non-zero quantized DCT coefficients (see particularly ISO 13818-2).

## Claims

1. A block motion searching method for motion compensated encoding calculating motion vectors by block-matching, **characterized by** comprising an inter-frame, a first block "X" positioned within said inter-frame, a reference frame to search said block "X" defining a search area, at least one second block "Y(j)" within said search area, wherein based on said first block "X" and said at least second block "Y(j)" a matrix of coefficients "Z" is defined following the formula Z = DCT2(X-Y[j])/Q comprising a Motion Search Using Nonzero DCT Coefficient Count for said digital video encoding.

2. A Method according to claim 1 **characterized by**, providing a reduction of the numbers of the coefficients "Z" wherein the difference of two blocks is discrete cosine transformed (DCT) and quantized by the formula Z = DCT2(X-Y[j])/Q in a first step and the non-zero coefficients in Z are counted and recorded in vector N such that N[j] = COUNT(Z) in a second step.

3. A Method according to claim 2, wherein "j" is incremented in a third step and the operation is repeated until all Y[j] blocks are tried.

4. A Method according to claim 3, wherein the minimum value Nm in vector N is identified and compared with a threshold previously defined.

5. A Method according to claim 4, wherein if said minimum value is below said threshold, a match occurs and said block "X" is inter-coded with motion vectors, if it is not, said block "X" is intra-coded.

6. An electronic device which is capable of operating a block motion searching operation for motion compensated encoding calculating motion vectors by block-matching **characterized in that** it comprises;
- a video encoder,
- a decoder application to decode encoded information

7. A video encoder according to Claim 6 **characterized in that** it comprises at least one digital video encoder and/or at least one block motion searching device which operates said block motion searching operation.
